# EUROPÄISCHE PATENTSCHRIFT

(11) **EP 1 068 687 B1**
(45) Veröffentlichungstag und Bekanntmachung des Hinweises auf die Patenterteilung: **11.01.2006**
(21) Anmeldenummer: 00908962.4
(22) Anmeldetag: 02.02.2000
(51) Int. Cl.: H04B 10/22

(54) **ANORDNUNG ZUR BERÜHRUNGSLOSEN ÜBERTRAGUNG VON OPTISCHEN DATEN**
ARRANGEMENT FOR THE CONTACTLESS TRANSMISSION OF OPTICAL DATA
DISPOSITIF POUR LA TRANSMISSION SANS CONTACT DE DONNEES OPTIQUES

(30) Priorität: 04.02.1999 DE 19904461
(43) Veröffentlichungstag der Anmeldung: 17.01.2001
(73) Patentinhaber: Stemmann-Technik GmbH, 48465 Schüttorf (DE)
(72) Erfinder: BARTHELT, Klaus, D-53501 Grafschaft 1 (DE)
(74) Vertreter: Bockermann, Rolf
(86) Internationale Anmeldenummer: PCT/DE2000/000273
(87) Internationale Veröffentlichungsnummer: WO 2000/046943

(56) Entgegenhaltungen:
- EP-A- 0 218 739
- EP-A- 0 833 467
- US-A- 4 109 997
- US-A- 5 568 578

## Beschreibung

Zur Übertragung von Daten zwischen einem stehenden und einem drehenden Bauteil ist es bekannt, digitale elektrische Signale in Lichtsignale umzuwandeln, diese Lichtsignale anschließend mit einem Projektor (Sender) auf einen Empfänger zu übertragen, wo dann die empfangenen Lichtsignale wieder in digitale elektrische Signale zurück verwandelt werden. Der Projektor bzw. der Empfänger können hierbei sowohl dem stehenden als auch dem drehenden Bauteil zugeordnet sein.

Die bekannte berührungslose Datenübertragung erweist sich dann als noch befriedigend, wenn eine nur geringe Datenrate übertragen werden soll und auch die Relativgeschwindigkeit zwischen dem stehenden und dem drehenden Bauteil nicht hoch ist. Probleme ergeben sich aber, wenn größere Datenraten bei einer höheren Relativgeschwindigkeit übertragen werden sollen. Grund hierfür bildet der Sachverhalt, dass eine Übertragung von Daten immer nur möglich ist, wenn sich der Projektor und der Empfänger auf derselben optischen Achse befinden. Dies ist aber nur einmal bei einer Umdrehung der Fall. Außerdem ergeben sich in diesem Zusammenhang Schwierigkeiten im Hinblick auf die Kontinuität der permanenten Datenübertragung.

Durch die US 4,109,997 gehört ein optischer Schleifring zum Stand der Technik, der eine Signalübertragung von einem rotierenden Körper zu einem nicht rotierenden Körper ohne physischen Kontakt ermöglicht. Durch den Einsatz ein Prisma werden die Effekte der Rotation quasi aufgehoben. Am Projektor sind femer ein Kollimator sowie ein mit mehreren gleich langen Lichtleitern versehener Lichtleiterarray vorgesehen.

Der Erfindung liegt ausgehend vom Stand der Technik die Aufgabe zugrunde, Maßnahmen vorzuschlagen, durch welche die permanente berührungslose Übertragung von Daten mit Hilfe von Lichtsignalen zwischen einem Sender und einem Empfänger verbessert wird, und zwar unabhängig davon, ob der Sender bzw. der Empfänger einem stehenden oder einem drehenden Bauteil zugeordnet sind.

Die Lösung dieser Aufgabe besteht nach der Erfindung in den Merkmalen des Anspruchs 1.

Die Erfindung macht sich hierbei den bekannten Effekt zunutze, dass Licht, welches auf eine Fläche eines Glaskörpers oder glasähnlichen Körpers fällt, in diesem Körper durch Totalreflektion weitergeleitet wird, Wenn dann noch Reflektionsprismen an dem Körper so vorgesehen werden, dass der Grenzwinkel der Totalreflektion überschritten wird, tritt jeder durch den Körper geleitete Lichtstrahl an der als Freifläche bezeichneten Grenzfläche Glas/Luft gebrochen aus. Erfolgt darüber hinaus eine Mattierung der Austrittsfläche, tritt das Licht diffus aus, so das die Freifläche leuchtet.

Die Erfindung verwendet nun einen ringförmigen Lichtleitkörper aus einem durchsichtigen Material wie Glas oder Kunststoff. Durch die gezielte Anordnung von Reflektionsprismen am Lichtleitkörper wird jeder in den Lichtleitkörper eingeleitete Lichtstrahl bis zu der mattierten Austrittsfläche (Freifläche) total reflektiert, wo der Lichtstrahl dann diffus austritt. Der dieser Freifläche gegenüberliegende Empfänger kann somit das Licht direkt empfangen und gezielt der elektronischen Auswertung zuleiten. Unabhängig davon, ob sich nun der Lichtleitkörper relativ zum Empfänger oder der Empfänger relativ zum Lichtleitkörper dreht, kann der Empfänger zu jeder Zeit das vom Projektor ausgesandte Lichtsignal empfangen und weiterieiten.

Die Erfindung erlaubt es folglich, die von einem Projektor ausgehenden Lichtsignale kontinuierlich Ober den Lichtleitkörper einem Empfänger zuzuleiten, und zwar unabhängig davon, in welcher Relativposition Empfänger und Lichtleitkörper zueinander stehen. Auf diese Weise kann im Vergleich zum Stand der Technik eine deutlich höhere Datenrate bei wesentlich höherer Relativgeschwindigkeit zwischen dem stehenden und dem drehenden Bauteil berührungslos übertragen werden.

Im Rahmen der Erfindung werden Lichtsignale nur in eine Richtung übertragen, und zwar entweder vom stehenden zum drehenden Bauteil oder vom drehenden zum stehenden Bauteil. Sollen Signale bidirektonal übertragen werden, so sind zwei voneinander unabhängige Anordnungen erforderlich.

Ein weiterer Vorteil der Erfindung wird darin gesehen, dass durch die ringförmige Gestaltung des Lichtleitkörpers dessen freier Zentrumsbereich zur Aufnahme von Bauteilen, wie beispielsweise Achsen und Wellen, genutzt werden kann. Femer ist es denkbar, dass durch diesen Zentrumsbereich Kabel oder Leitungen zum Transport beliebiger Produkte verlegt werden können.

Der erfindungsgemäße Lichtleitkörper ist einfach herzustellen, und zwar beispielsweise durch Spritzen aus Acrylglas. Auf diese Weise können Lichtleitkörper in nahezu jeder gewünschten Größenordnung bei hohen Stückzahlen wirtschaftlich und insbesondere exakt reproduzierbar gefertigt werden.

Der Projektor umfasst mindestens eine im Rhythmus digitaler elektrischer Signale pulsbare Laserdiode und der Empfänger wenigstens einen mit einer elektronischen Auswertung direkt oder indirekt gekoppelten Fototransistor. Aufgrund dessen können nahezu beliebig viele Laserdioden mit unterschiedlichen Wellenlängen und mit jeweils darauf abgestellten Empfängern in die Anordnung integriert werden. Somit ist es möglich, gleichzeitig voneinander unabhängige Lichtsignale über den Lichtleitkörper zwischen einem stehenden und einem drehenden Bauteil berührungslos zu übertragen.

Da im Rahmen der Erfindung ein in den Lichtleitkörper eingespeister Lichtstrahl aufgrund der ringförmigen Gestaltung des Lichtleitkörpers geteilt wird und diesen in zwei Richtungen durchläuft, haben die beiden Lichtstrahlen bis auf die ideale 180°-Position von Projektor und Empfänger ansonsten stets zwei unterschiedlich lange Wege zurückzulegen. Der Empfänger muss daher zwei zeitlich zueinander versetzte Lichtsignale auswerten. Dies kann bei sehr großen Datenraten und hohen Relativgeschwindigkeiten dazu führen, dass die Genauigkeit der Datenübertragung zu wünschen übrig lässt. Um auch in diesen Fällen eine qualitätsmäßig absolut befriedigende Datenübertragung sicherzustellen, ist vorgesehen, dass der Projektor einen Kollimator sowie einen mit mehreren gleich langen Lichtleitern versehenen Lichtleiterarray umfasst, wobei die Lichtleiter in gleichen Abständen umfangsseitig des Lichtleitkörpers Licht leitend angeschlossen sind. Die Anzahl der Lichtleiter hängt hierbei im wesentlichen von der Datenrate, der Relativgeschwindigkeit des stehenden zum drehenden Bauteil, der gewünschten Übertragungsqualität sowie der Größe de jeweils eingesetzten Lichtleitkörpers ab, Gleich lange Lichtleiter sowie die gleichmäßige umfangsseitige Versetzung der Anschlüsse der Lichtleier an den Lichtleitkörper gewährleisten, dass jeder Lichtstrahl nur kurze Wege im Lichtleitkörper zurücklegen muss. Das Ergebnis ist eine sehr geringe Laufzeitverzögerung des jeweiligen Lichtsignals verbunden mit einer deutlich größeren Empfangsgenauigkeit. Die Datenrate kann außerordentlich hoch sein bei einer großen Relativgeschwindigkeit des drehenden zum stehenden Bauteil.

Die einer Laserdiode über ein Lichtleiterarray zugeordneten Lichtleiter sind an Schalen angeschlossen, die mit dem ringförmigen Lichtleitkörper einstückig verbunden sind. Außerdem sind am Lichtleitkörper den einzelnen Schalen zugeordnete und entsprechend segmentierte schalenartig konfigurierte Reflektionsprismen vorgesehen. Diese Gestaltung sorgt dafür, dass das über einen Lichtleiter in jede Schale eingeleitete Lichtsignal nur in das dieser Schale zugeordnete Segment des Lichtleitkörpers eintritt. Eine zirkulare Ausbreitung des Lichts im Lichtleitkörper wird sicher verhindert.

Durch die Segmentierung der Reflektionsprismen könnten zwischen benachbarten Segmenten Lücken entstehen, die zu Unterbrechungen führen. Diese Lücken werden dadurch vermieden, dass an den Schnittstellen der Schalen mit dem Lichtleitkörper die im Vergleich zum Lichtleitkörper abweichende Krommungen aufweisenden Reflektionsprismen sich durchdringen. Hierdurch gibt es an den Schnittstellen Überlappungen der Lichtflecke, so dass durch die gleichzeitige phasengleiche Einleitung des Lichts in die Schalen keine zeitlichen Verschiebungen und auch keine Laufzeitverzögerungen der Lichtsignale entstehen.

In diesem Zusammenhang ist es dann gemäß Anspruch 2 von Vorteil, dass jedem Fototransistor ein auf eine bestimmte Wellenlänge abgestimmter Filter, insbesondere im Bandbreitanbereich von ca. 2 Nanometer (nm), zugeorcinet ist.

Die Erfindung ist nachfolgend anhand von in den Zeichnungen dargestellten Ausführungsbeispielen näher erläutert. Es zeigen:
- Figur 1: in schematischer Schnittdarstellung eine Anordnung zur berührungslosen Übertragung von Daten mittels Lichtsignale;
- Figur 2: in schematischer Stimansicht einen Lichtleitkörper gemäß einer weiteren Ausführungsform;
- Figur 3: in vergrößerter Darstellung einen Querschnitt durch die Figur 2 entlang der Linie III-III;
- Figur 4: in schematischer Darstellung einen Projektor mit Lichtleitern und
- Figur 5: in schematischer Darstellung drei Projektoren unterschiedlicher Wellenlänge mit Lichtleitern.

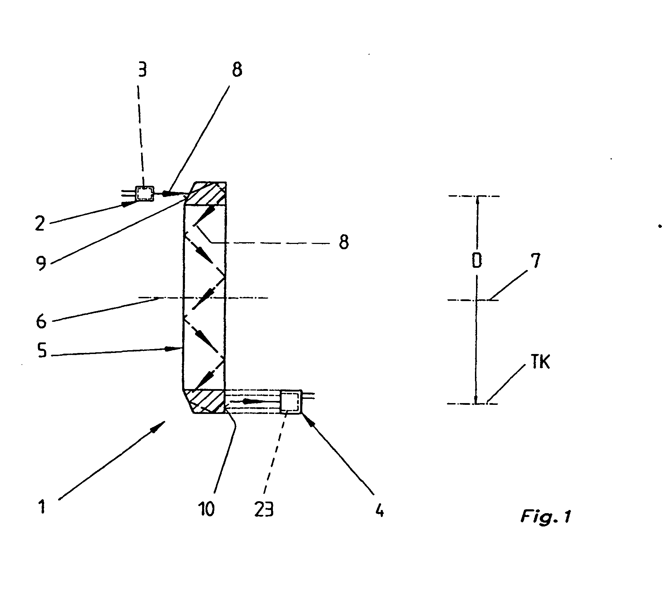

In der Figur 1 ist mit 1 eine Anordnung zur berührungslosen Übertragung von Daten zwischen einem drehenden und einem stehenden Bauteil bezeichnet. Die beiden Bauteile sind nicht näher dargestellt. Dem stehenden Bauteil ist ein Projektor 2 zugeordnet, welcher eine im Rhythmus digitaler elektrischer Signale pulsbare Laserdiode 3 umfasst. Dem drehenden Bauteil ist ein Empfänger 4 in Form eines mit einer nicht näher dargestellten elektronischen Auswertung gekoppelten Fototransistors 23 zugeordnet. Der Empfänger 4 rotiert auf einem Teilkreis TK mit dem Durchmesser D.

Zwischen dem Projektor 2 und dem Empfänger 4 ist ein ringförmiger Lichtleitkörper 5 aus gespritztem Acrylglas ortsfest angeordnet. Die Mittelachse 6 des Lichtleitkörpers 5 erstreckt sich koaxial zur Drehachse 7 des Empfängers 4.

Wird von dem Projektor 2 ein Lichtstrahl 8 über eine Stirnseite 9 in den Lichtleitkörper 5 gesandt, so wird dieser Lichtstrahl 8 in dem Lichtleitkörper 5 durch Totalreflektion weitergeleitet. Durch in der Figur 1 nicht näher veranschaulichte Reflektionsprismen wird der Lichtstrahl 8 letztlich so im Lichtleitkörper 5 umgelenkt, dass der Grenzwinkel der Totalreflektion überschritten wird. Der Lichtstrahl 8 tritt dann an der mattierten kreisringförmigen Freifläche 10 des Lichtleitkörpers 5 diffus aus. Diese Freifläche 10 leuchtet, so dass der Empfänger 4 in jeder Relativstellung zum Lichtleitkörper 5 dieses Licht empfangen und der elektronischen Auswertung zuleiten kann.

Schaltet man nun das Licht am Projektor 2 im Rhythmus von digitalen elektrischen Signalen ein und aus, werden diese elektrischen Signale in Lichtsignale umgeformt. Der Empfänger 4 kann diese Lichtsignale an jeder Stelle der Freifläche 10 aufnehmen und durch geeignete elektronische Maßnahmen werden sie wieder in ein digitales elektrisches Signal zurück verwandelt. Die Kontinuität der Übertragung ist gewährleistet.

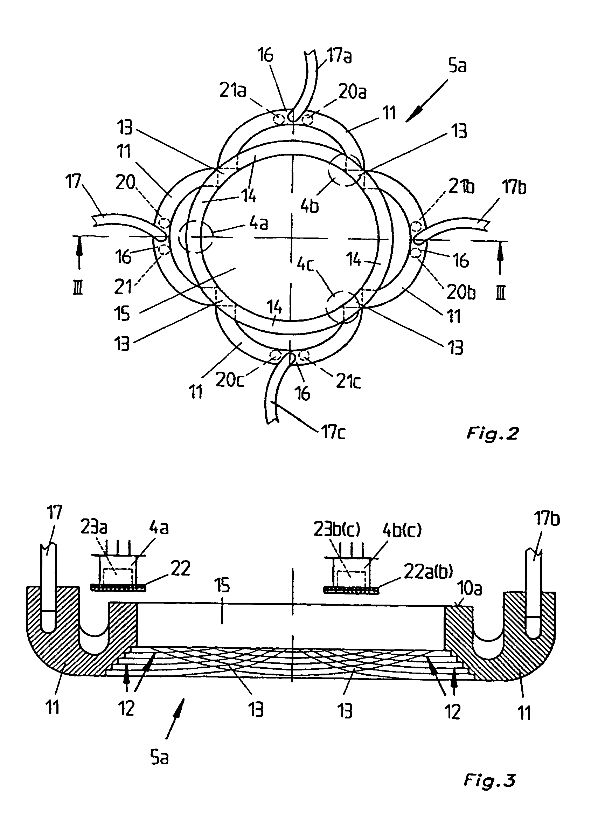

In den Figuren 2 und 3 ist eine Ausführungsform eines Lichtleitkörpers 5a dargestellt, bei der am Umfang des Lichtleitkörpers 5a Schalen 11 einstückig angeformt sind. Die Schalen 11 haben einen etwa L-förmigen Querschnitt. Beim Ausführungsbeispiel sind vier Schalen 11 um jeweils 90° zueinander versetzt am Umfang des Lichtleitkörpers 5a vorgesehen.

Im Bereich jeder Schale 11 ist die Innenseite des Lichtleitkörpers 5a mit segmentierten schalenartig konfigurierten Reflektionsprismen 12 versehen (Figur 3). Die Segmentierung ergibt sich daraus, dass die Krümmungen der Reflektionsprismen 12 kleiner als die Krümmung des Lichtleitkörpers 5a bemessen sind. An den Schnittstellen 13 der Schalen 11 mit dem Lichtleitkörper 5a durchdringen sich die Reflektionsprismen 12 einander benachbarter Segmente 14.

Die kreisringförmige Freifläche 10a des Lichtleitkörpers 5a ist mattiert.

Der Zentrumsbereich 15 des Lichtleitkörpers 5a ist offen und daher zur Durchführung von Achsen, Wellen, Kabeln oder Leitungen geeignet.

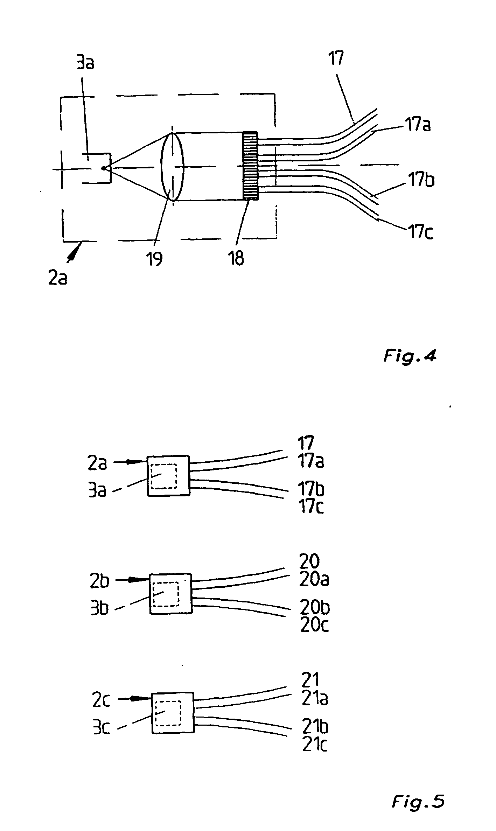

In den Zentralbereichen 16 der Schalen 11 sind Lichtleiter 17, 17a-c angeschlossen, die eine übereinstimmende Länge haben und mit ihren anderen Enden gemäß Figur 4 zu einem Lichtleiterarray 18 zusammengefasst sind. Dieses Lichtleiterarray 18 wird mittels eines geeigneten Kollimators 19 von einer gepulsten Laserdiode 3a beleuchtet. Lichtleiterarray 18, Kollimator 19 und Laserdiode 3a sind zu einem Projektor 2a zusammengefasst.

Werden gemäß Figur 5 mehrere solcher Projektoren 2a, 2b, 2c, beim Ausführungsbeispiel drei Projektoren 2a, 2b, 2c mit Laserdioden 3a, 3b, 3c versehen, die Licht unterschiedlicher Wellenlängen aussenden und werden deren Lichtleiter 17, 17a-c; 20, 20a-c; 21, 21a-c ebenfalls an je eine Schale 11 geführt (strichpunktierte Darstellung in Figur 2), so können mehrere unabhängige Lichtsignale parallel übertragen werden.

Beim Ausführungsbeispiel der Figuren 2, 3 und 5 ist dann für jede Laserdiode 3a, 3b, 3c auch ein eigener Empfänger 4a, 4b, 4c mit einem Fototransistor 23a, 23b, 23c erforderlich. Diesem Empfänger 4a, 4b, 4c sind Filter 22, 22a, 22b zugeordnet, die auf die verschiedenen Wellenlängen abgestimmt sind. Die Empfänger 4a, 4b, 4c liegen der Freifläche 10a frontal gegenüber.

### Bezugszeichenaufstellung

- 1 -: Anordnung
- 2 -: Projektor
2a - Projektor
2b - Projektor
2c - Projektor
- 3 -: Laserdiode
3a - Laserdiode
3b - Laserdiode
3c - Laserdiode
- 4 -: Empfänger
4a - Empfänger
4b - Empfänger
4c - Empfänger
- 5 -: Lichtleitkörper
5a - Lichtleitkörper
- 6 -: Mittelachse v. 5
- 7 -: Drehachse v. 4
- 8 -: Lichtstrahl
- 9 -: Stirnseite v. 5
- 10 -: Freifläche v. 5
10a - Freifläche v. 5a
- 11 -: Schalen
- 12 -: Reflektionsprismen
- 13 -: Schnittstellen v. 11 u. 5a
- 14 -: Segmente v. 5a
- 15 -: Zentrumsbereich v. 5a
- 16 -: Zentralbereich v. 11
- 17 -: Lichtleiter
17a - Lichtleiter
17b - Lichtleiter
17c - Lichtleiter
- 18 -: Lichtleiterarray
- 19 -: Kollimator
- 20 -: Lichtleiter
20a - Lichtleiter
20b - Lichtleiter
20c - Lichtleiter
- 21 -: Lichtleiter
21a - Lichtleiter
21b - Lichtleiter
21c - Lichtleiter
- 22 -: Filter
22a - Filter
22b - Filter
- 23 -: Fototransistor
23a - Fototransistor
23b - Fototransistor
23c - Fototransistor

- D -: Durchmesser v. TK
- TK -: Teilkreis

## Patentansprüche

1. Anordnung zur berührungslosen Übertragung von Daten zwischen einem drehenden und einem stehenden Bauteil mittels von einem Projektor (2, 2a-c) ausgesandter und von einem Empfänger (4, 4a-c) detektierter Lichtsignale, bei welcher zwischen den Projektor (2, 2a-c) und den Empfänger (4, 4a-c) ein ringförmiger Lichtleitkörper (5, 5a) aus einem durchsichtigen Material mit integrierten Reflektionsprisma eingegliedert ist und der Projektor (2a-c) einen Kollimator (19) sowie einen mit mehreren gleich langen Lichtleitern (17, 17a-c; 20, 20a-c; 21, 21a-c) versehenen Lichtleiterarray (18) umfasst, wobei die Lichtleiter (17, 17a-c; 20, 20a-c; 21, 21a-c) in gleichen Abständen umfangsseitig des Lichtleitkörpers (5a) Licht leitend angeschlossen sind, **dadurch gekennzeichnet, dass** das Reflektionsprisma aus mehreren Reflektionsprismen (12) zusammengesetzt und die dem Empfänger (4, 4a-c) gegenüberliegende Austrittsfläche (10, 10a) des Lichtleitkörpers (5, 5a) mattiert ist, wobei der Projektor (2, 2a-c) mindestens eine im Rhythmus digitaler elektrischer Signale pulsbare Laserdiode (3, 3a-c) und der Empfänger (4, 4a-c) wenigstens einen mit einer elektronischen Auswertung gekoppelten Fototransistor (23, 23a-c) umfassen, wobei am Umfang des Lichtleitkörpers (5a) an die Anzahl der Lichtleiter (17, 17a-c; 20, 20a-c; 21, 21a-c) angepasste sowie mit den Lichtleitern (17, 17a-c; 20, 20a-c; 21, 21a-c) Licht leitend verbundene Schalen (11) einstückig angeformt und am Lichtleitkörper (5a) mehrere entsprechend den Schalen (11) segmentierte Reflektionsprismen (12) vorgesehen sind, und wobei an den Schnittstellen (13) der Schalen (11) mit dem Lichtleitkörper (5a) die im Vergleich zum Lichtleitkörper (5a) abweichende Krümmungen aufweisenden Reflektionsprismen (12) sich durchdringen.

2. Anordnung nach Anspruch 1, bei welcher jedem Fototransistor (23, 23a-c) ein auf eine bestimmte Wellenlänge abgestimmter Filter (22, 22a, 22b) zugeordnet ist.

## Claims

1. Arrangement for the contactless transmission of data between a rotating and a stationary component by means of light signals which are emitted by a projector (2, 2a-c) and detected by a receiver (4, 4a-c), in the case of which arrangement an annular light guide body (5, 5a) made from a transparent material with integrated reflection prism is incorporated between the projector (2, 2a-c) and the receiver (4, 4a-c), and the projector (2a-c) comprises a collimator (19) as well as a light guide array (18) provided with a number of light guides (17, 17a-c; 20, 20a-c; 21, 21a-c) of the same length, the light guides (17, 17a-c; 20, 20a-c; 21, 21a-c) being connected in a light-guiding fashion at equal spacings on the circumference of the light guide body (5a), **characterized in that** the reflection prism is composed of a number of reflection prisms (12), and the exit surface (10, 10a), opposite the receiver (4, 4a-c), of the light guide body (5, 5a) is frosted, the projector (2, 2a-c) comprising at least one laser diode (3, 3a-c) which can be pulsed in a rhythm of digital electrical signals, and the receiver (4, 4a-c) comprising at least one phototransistor (23, 23a-c) coupled to an electronic evaluation means, shells (11) which are adapted to the number of the light guides (17, 17a-c; 20, 20a-c; 21, 21a-c) and are connected in a light-guiding fashion to the light guides (17, 17a-c; 20, 20a-c; 21, 21a-c) being integrally formed in one piece on the circumference of the light guide body (5a), and a number of reflection prisms (12) segmented in accordance with the shells (11) being provided on the light guide body (5a), and the reflection prisms (12), which have different curvatures (by comparison with the light guide body (5a)), penetrating one another at the points of intersection (13) of the shells (11) with the light guide body (5a).

2. Arrangement according to Claim 1, in which each phototransistor (23, 23a-c) is assigned a filter (22, 22a, 22b) tuned to a specific wavelength.

## Revendications

1. Dispositif pour la transmission sans contact de données entre un élément de structure rotatif et un élément de structure fixe au moyen d'un projecteur (2, 2a-c) de signaux lumineux émis et détectés par un récepteur (4, 4a-c), dans lequel entre le projecteur (2, 2a-c) et le récepteur (4, 4a-c) est incorporé un élément guide de lumière annulaire (5, 5a) en un matériau transparent avec un prisme de réflexion intégré, et le projecteur (2a-c) comprend un collimateur (19) ainsi qu'un ensemble de guides de lumière (18) équipé de plusieurs guides de lumière de même longueur (17, 17a-c ; 20, 20a-c ; 21, 21a-c), les guides de lumière (17, 17a-c ; 20, 20a-c ; 21, 21a-c) étant connectés à des distances égales sur la périphérie du corps guide de lumière (5a) pour conduire la lumière, **caractérisé en ce que** le prisme de réflexion est constitué de plusieurs prismes de réflexion (12) assemblés et la surface de sortie (10, 10a) en regard du récepteur (4, 4a-c) du corps de guide de lumière (5, 5a) est dépolie, dans lequel le projecteur (2, 2a-c) comprenant au moins une diode laser (3, 3a-c) pouvant émettre des impulsions au rythme de signaux électriques numériques et le récepteur (4, 4a-c) comprenant au moins un phototransistor (23, 23a-c) accouplé à une évaluation électronique, sur la périphérie du corps de guide de lumière (5a), étant prévus, de façon correspondante au nombre de guides de lumière (17, 17a-c ; 20, 20a-c ; 21, 21a-c) et de façon correspondante aux coquilles (11) guidant une partie de la lumière des guides (17, 17a-c ; 20, 20a-c ; 21, 21a-c) sur le corps conducteur de lumière (5a), plusieurs prismes de réflexion (12) segmentés et des interfaces (13) des coquilles (11) avec le corps guide de lumière (5a), venant s'imbriquer dans les prismes de réflexion (12) présentant des courbures différentes du corps de guide de lumière (5a).

2. Dispositif selon la revendication 1, dans lequel un filtre (22, 22a, 22b) ajusté à une longueur d'onde déterminée est affecté à chaque phototransistor (23, 23a-c) .
